# EUROPÄISCHE PATENTSCHRIFT

(11) **EP 3 919 293 B1**
(45) Veröffentlichungstag und Bekanntmachung des Hinweises auf die Patenterteilung: **09.08.2023**
(21) Anmeldenummer: 21177106.8
(22) Anmeldetag: 01.06.2021
(51) Int. Cl.: B60C 9/00, B60C 9/22, B60C 9/04

(54) **FESTIGKEITSTRÄGERLAGE UND FAHRZEUGLUFTREIFEN**
REINFORCING SUPPORT LAYER AND PNEUMATIC TYRE FOR A VEHICLE
COUCHE SUPPORT DE RÉSISTANCE ET PNEUMATIQUES DE VÉHICULE

(30) Priorität: 04.06.2020 DE 102020206965
(43) Veröffentlichungstag der Anmeldung: 08.12.2021
(73) Patentinhaber: Continental Reifen Deutschland GmbH, 30165 Hannover (DE)
(72) Erfinder: Reese, Wolfgang, 30419 Hannover (DE)
(74) Vertreter: Continental Corporation

(56) Entgegenhaltungen:
- DE-A1-102010 017 107
- DE-A1-102012 105 766
- DE-A1-102016 223 304
- US-A1- 2009 139 626
- US-A1- 2017 080 757
- US-A1- 2018 258 563
- AY&SCEDIL;E AYTA? ET AL: "FATIGUE PROPERTIES OF NYLON 66/POLYESTER HYBRID CORDS", RUBBER CHEMISTRY AND TECHNOLOGY, Bd. 84, Nr. 4, 1. Dezember 2011 (2011-12-01), Seiten 482-492, XP055330377, US ISSN: 0035-9475, DOI: 10.5254/1.3592292
- AYÅ E AYTA ET AL: "Nylon 66/polyester hybrid cords: 1. Design and investigation of properties", FIBERS AND POLYMERS, THE KOREAN FIBER SOCIETY, HEIDELBERG, Bd. 12, Nr. 2, 7. April 2011 (2011-04-07), Seiten 252-257, XP019894680, ISSN: 1875-0052, DOI: 10.1007/S12221-011-0252-8

## Beschreibung

Die Erfindung betrifft eine Festigkeitsträgerlage für elastomere Erzeugnisse wie PKW-Fahrzeugluftreifen, wobei die Festigkeitsträger Hybridcorde aus wenigstens zwei miteinander endverdrehten Multifilamentgarnen sind, welche innerhalb der Lage im Wesentlichen parallel zueinander und beabstandet voneinander angeordnet sind und wobei ein Multifilamentgarn aus Polyethylenterephthalat (PET) und ein anderes Multifilamentgarn aus Polyamid besteht. Des Weiteren betrifft die Erfindung einen Fahrzeugluftreifen, der wenigstens eine erfindungsgemäße Festigkeitsträgerlage enthält.

Ein derartiges elastomeres Erzeugnis und ein entsprechender Fahrzeugluftreifen sind aus der DE 10 2012 105 766 A1 bekannt geworden.

Festigkeitsträger zur Verstärkung verschiedener elastomerer Erzeugnisse sind hinreichend bekannt. So ist für Fahrzeugluftreifen bekannt, eine Gürtelbandage zu verwenden, welche ein- oder mehrlagig ausgebildet ist, welche die Gürtelränder abdeckt und parallel und im Wesentlichen in Umfangsrichtung verlaufende Festigkeitsträger in Form von im Gummi eingebetteten Corden enthält. Diese Gürtelbandage dient dazu, insbesondere im Hochgeschwindigkeitseinsatz eine Erhebung des Reifen durch die im Fahrbetrieb auftretenden Fliehkräfte zu verhindern.

Die Gürtelbandage wird bei der Reifenherstellung in Form von Lagen, Streifen oder Einzel-Corden mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, indem eine Schar von im Wesentlichen parallel liegenden fadenförmigen Festigkeitsträgern, die in der Regel thermisch und/oder zur besseren Haftung am einbettenden Gummi in der der fachkundigen Person bekannten Art mit einer Imprägnierung vorbehandelt sind, in Längsrichtung einen Kalander oder einen Extruder zur Ummantelung mit der Kautschukmischung durchlaufen. Bei der Bombage mit bisher im Einsatz befindlichen Vorrichtungen und der Vulkanisation des Reifens dehnt sich der Reifen in der Regel im Schulterbereich durch die Erhebung um bis zu 2 % und im Mittenbereich um bis zu 4 % im Vergleich zum unvulkanisierten Rohling, wenn der Rohling auf einer flachen Trommel gewickelt wird. Bei neueren Aufbautrommeln wird nur noch eine geringere Dehnung während der Reifenherstellung von etwa max. 2 % gefordert. Bei moderneren Vorrichtungen ist die Erhebung geringer. Ein weiteres Problem besteht in dem Schrumpfverhalten des jeweiligen Cordmaterials bei erhöhter Temperatur. Ein geringeres Schrumpfverhalten bedingt eine höhere Dimensionsstabilität des Fahrzeugreifens und somit ein besseres, der fachkundigen Person bekanntes, Flatspotverhalten (= reversible plastische Abplattungen in der Bodenaufstandsfläche beim Parken).

Die Corde der Gürtelbandage sollen bei der Reifenherstellung eine ausreichende Erhebung bei der Bombage und in der Vulkanisationsform zulassen, damit der Reifen präzise ausgeformt werden kann, und sie sollen nach der Fertigstellung des Reifens im Fahrbetrieb eine gute Hochgeschwindigkeitstauglichkeit, d.h. eine gute Dimensionsstabilität, gewährleisten. Um diesen Anforderungen zu genügen, sollten sich die Corde bis zu einer Dehnung von ca. 3 bis 4 % mit mäßigem Kraftaufwand und ab einer höheren Dehnung nur noch mit sehr hohem Kraftaufwand dehnen lassen.

Ein aus der DE 10 2012 105 766 A1 bekannter Hybridcord besteht aus einem Multifilamentgarn aus PET und einem anderen Multifilamentgarn aus PA6.6, welche miteinander endverdreht sind. Durch diese Materialpaarung sind insbesondere bei Verwendung als Gürtelbandagenlage im Fahrzeugluftreifen ein erwünscht gutes Schrumpfverhalten und erwünscht hohe Schrumpfkräfte bei moderatem Gewicht erhalten.

Ebenso sind generell aus der DE 10 2012 105 766 A1 Festigkeitsträger mit Hybridcorden bekannt, die aus einem Garn aus Polyester wie PET und einem anderen Multifilamentgarn aus Polyamid wie PA4.6 bestehen, welche miteinander endverdreht sind.

Auch für Fördergurte, Antriebsriemen, Schläuche und Luftfederbälge ist der Einsatz von Festigkeitsträgern mit auf die Anforderungen abgestimmten physikalischen Eigenschaften notwendig.

Es ist Aufgabe der Erfindung, eine Festigkeitsträgerlage für elastomere Erzeugnisse aus Hybridcorden aus einem Multifilamentgarn aus Polyester und einem Multifilamentgarn aus Polyamid bereitzustellen, welche eine vergleichbare Festigkeit, jedoch eine verbesserte thermische Stabilität aufweist. Es ist ebenfalls Aufgabe der Erfindung, einen Fahrzeugluftreifen mit einer Festigkeitsträgerlage zur Verfügung zu stellen, welche eine vergleichbare Festigkeit, jedoch eine weitaus bessere Hochgeschwindigkeitstauglichkeit aufweist.

Gelöst wird die Aufgabe in Bezug auf die Festigkeitsträgerlage erfindungsgemäß dadurch, dass das Multifilamentgarn aus Polyamid ein Polyamid 4.6 (PA4.6) ist und dass die Festigkeitsträgerlage bei einer Dehnung von 4%, bezogen auf eine Breite der Festigkeitsträgerlage von 10 mm, eine Festigkeit im Bereich von 100 N/cm bis 500 N/cm, bevorzugt eine Festigkeit im Bereich von 130 N/cm bis 430 N/cm aufweist, wobei die Messungen in Anlehnung an ASTM D 855 durchgeführt sind.

Überraschenderweise wurde gefunden, dass eine solche Festigkeitsträgerlage einen vergleichbaren Modul, jedoch eine weitaus höhere thermische Stabilität als PA 6.6 aufweist.

Die Begriffe Garn und Multifilamentgarn sowie Garn aus PET und PET-Garn sowie Garn aus PA4.6 und PA4.6-Garn werden im Rahmen der Erfindung synonym verwendet.

Vorteilhaft kann es sein, wenn das Multifilamentgarn aus PET eine Feinheit im Bereich von 200 dtex bis 2000 dtex aufweist und ein HMLS-PET oder ein reg.-PET oder ein recyceltes PET ist.

Das Polyestergarn der erfindungsgemäßen Festigkeitsträgerlage ist ein HMLS-Polyestergarn (High Modulus Low Shrinkage) oder ein reg.-Polyestergarn, wobei "reg." für "regulär" steht und "High Modulus Normal Shrinkage" bedeutet oder ein recyceltes PET, welches umweltfreundlich(er) ist.

Diese Garne weisen eine gute thermische Stabilität auf, wodurch sie den Anforderungen in den genannten Anwendungen gerecht werden; wie z.B. der Hochgeschwindigkeitstauglichkeit bei der Anwendung im Fahrzeugluftreifen.

Zweckmäßig kann es sein, wenn das Mutlifilamentgarn aus PA4.6 eine Feinheit im Bereich von 200 dtex bis 2000 dtex aufweist. Ein dünneres Garn würde Schwierigkeiten im Prozessing verursachen, ein dickeres Garn würde zu großen Nachteile bezüglich des Rollwiderstandes des Reifens führen.

In einer Ausführung der Erfindung weist der Hybridcord die Konstruktion PET 360 dtex x1 + PA4.6 470 dtex x1 auf. In einer alternativen Ausführung weist der Hybridcord die Konstruktion PET 550 dtex x1 + PA4.6 470 dtex x1 auf. Die Hybridcorde weisen einen vergleichsweise geringen Corddurchmesser auf, wodurch Vorteile bezüglich des Rollwiderstandes des Reifens erreicht sind.

In einer anderen Ausführung der Erfindung weist der Hybridcord die Konstruktion PET 1100 dtex x1 + PA4.6 940 dtex x1 auf. Der Hybridcord weist einen mittleren Gesamt-dtex, also eine mittleren/üblichen Corddurchmesser auf und ist somit für eine sehr breite Anwendung geeignet.

In einer wiederum anderen Erfindung weist der Hybridcord die Konstruktion PET 1440 dtex x1 + PA4.6 1400 dtex x1 auf. Dieser Hybridcord weist einen hohen Modul auf, welcher insbesondere zur Anwendung in UltraHighPerformance-Reifen erwünscht ist.

Alle Ausführungsbeispiele des Hybridcordes sind möglichst symmetrisch bzgl. des dtex aufgebaut, um einen einfachen Twistprozess zu gewährleisten.

Zweckmäßig ist es, wenn der Twistfaktor α eines jeden Multifilamentgarnes oder des Hybridcordes in einem Bereich von 120 bis 230, vorzugsweise in einem Bereich von 140 bis 210 liegt, wobei α=Twist [t/m] × (Feinheit [tex]/1000)^{1/2} ist.

Vorteilhaft ist es, wenn der Hybridcord einen Schrumpf bei 180°C in einem Bereich von 4,0 % bis 6,5 %, bevorzugt in einem Bereich von 4,5 % bis 6,0 % aufweist, wobei die Messungen in Anlehnung an ASTM D 855 durchgeführt sind.

In Bezug auf den Fahrzeugluftreifen wird die Erfindung dadurch gelöst, dass dieser Fahrzeugluftreifen zumindest eine Festigkeitsträgerlage wie zuvor beschrieben aufweist und dass die Festigkeitsträgerlage eine Gürtelbandagenlage und/oder ein Wulstverstärker ist.

Ein Fahrzeugluftreifen weist eine gute Dimensionsstabilität, eine besonders gute Hochgeschwindigkeitstauglichkeit und ein nahezu gleiches Reifengewicht auf. Durch die höhere thermische Stabilität baut die Zugfestigkeit insbesondere an den stark durch Bewegung belasteten und damit erwärmten Gürtelkanten weniger stark ab. Hierdurch ist die Hochgeschwindigkeitstauglichkeit verbessert. Abplattungen bei Last (Flatspotting) sind stark reduziert. Bevorzugt ist die erfindungsgemäße Festigkeitsträgerlage als Gürtelbandage und/oder Wulstverstärker ausgebildet, um die genannten Vorteile zu erreichen.

Die Vorteile werden auch bei der Verwendung der vorbeschriebenen Festigkeitsträgerlage zur Herstellung von weiteren elastomeren Erzeugnissen, wie Fördergurte, Antriebsriemen, Schläuche und Luftfederbälge erzielt.

## Patentansprüche

1. Festigkeitsträgerlage für elastomere Erzeugnisse wie PKW-Fahrzeugluftreifen, Fördergurte, Antriebsriemen, Schläuche und Luftfederbälge, wobei die Festigkeitsträger Hybridcorde aus wenigstens zwei miteinander endverdrehten Multifilamentgarnen sind, welche innerhalb der Lage im Wesentlichen parallel zueinander und beabstandet voneinander angeordnet sind und wobei ein Multifilamentgarn aus Polyethylenterephthalat (PET) und ein anderes Multifilamentgarn aus Polyamid 4.6 (PA4.6) besteht, **dadurch gekennzeichnet, dass** die Festigkeitsträgerlage bei einer Dehnung von 4%, bezogen auf eine Breite der Festigkeitsträgerlage von 10 mm, eine Festigkeit im Bereich von 100 N/cm bis 500 N/cm, bevorzugt eine Festigkeit im Bereich von 130 N/cm bis 430 N/cm aufweist, wobei die Messungen in Anlehnung an ASTM D 855 durchgeführt sind.

2. Festigkeitsträgerlage nach Anspruch 1, **dadurch gekennzeichnet, dass** das Multifilamentgarn aus PET ein HMLS-PET oder ein reg.-PET oder ein recycletes PET ist.

3. Festigkeitsträgerlage nach einem oder mehreren der Ansprüche 1 oder 2, **dadurch gekennzeichnet, dass** der Hybridcord die Konstruktion PET 360 dtex x1 + PA4.6 470 dtex x1 oder PET 550 dtex x1 + PA4.6 470 dtex x1 oder die Konstruktion PET 1100 dtex x1 + PA4.6 940 dtex x1 oder die Konstruktion PET 1440 dtex x1 + PA4.6 1400 dtex x1 aufweist.

4. Festigkeitsträgerlage nach einem oder mehreren der Ansprüche 1 bis 3, **dadurch gekennzeichnet, dass** der Twistfaktor α eines jeden Multifilamentgarnes oder des Hybridcordes in einem Bereich von 120 bis 230, vorzugsweise in einem Bereich von 140 bis 210 liegt, wobei α=Twist [t/m] × (Feinheit [tex]/1000)^{1/2}.

5. Festigkeitsträgerlage nach einem oder mehreren der Ansprüche 1 bis 4, **dadurch gekennzeichnet, dass** der Hybridcord einen Schrumpf in einem Bereich von 4,0 % bis 6,5 %, bevorzugt in einem Bereich von 4,5 % bis 6,0 % bei 180°C aufweist, wobei die Messungen in Anlehnung an ASTM D 855 durchgeführt sind.

6. Fahrzeugluftreifen, enthaltend zumindest eine Festigkeitsträgerlage nach einem der Ansprüche 1 bis 5, **dadurch gekennzeichnet, dass** die Festigkeitsträgerlage eine Gürtelbandagenlage und/oder ein Wulstverstärker ist.

## Claims

1. Strength member ply for elastomeric products such as passenger car pneumatic vehicle tires, conveyor belts, drive belts, hoses and air spring bellows, wherein the strength members are hybrid cords of at least two mutually end-twisted multifilament yarns which within the ply are arranged substantially parallel to one another and spaced apart from one another and wherein one multifilament yarn is composed of polyethylene terephthalate (PET) and another multifilament yarn is composed of polyamide 4.6 (PA 4.6), **characterized in that** at an extension of 4% based on a width of the strength member ply of 10 mm the strength member ply has a strength in the range from 100 N/cm to 500 N/cm, preferably a strength in the range from 130 N/cm to 430 N/cm, wherein the measurements are performed on the basis of ASTM D 855.

2. Strength member ply according to Claim 1, **characterized in that** the multifilament yarn composed of PET is an HMLS PET or a reg.-PET or a recycled PET.

3. Strength member ply according to one or more of Claims 1 or 2, **characterized in that** the hybrid cord has the construction PET 360 dtex x1 + PA4.6 470 dtex x1 or PET 550 dtex x1 + PA4.6 470 dtex x1 or the construction PET 1100 dtex x1 + PA4.6 940 dtex x1 or the construction PET 1440 dtex x1 + PA4.6 1400 dtex x1.

4. Strength member ply according to one or more of Claims 1 to 3, **characterized in that** the twist factor α of each multifilament yarn or of the hybrid cord is in a range from 120 to 230, preferably in a range from 140 to 210, wherein α=twist[t/m]×(fineness[tex]/1000)^{1/2}.

5. Strength member ply according to one or more of Claims 1 to 4, **characterized in that** the hybrid cord has a shrinkage in a range from 4.0% to 6.5%, preferably in a range from 4.5% to 6.0% at 180°C, wherein the measurements are performed on the basis of ASTM D 855.

6. Pneumatic vehicle tire containing at least one strength member ply according to any of Claims 1 to 5, **characterized in that** the strength member ply is a belt bandage ply and/or a bead reinforcement.

## Revendications

1. Couche de renforcement pour produits élastomères tels que des pneus pour voitures de tourisme, des courroies de convoyeur, des courroies d'entraînement, des tuyaux flexibles et des soufflets de suspension pneumatique, les renforcements étant des câblés hybrides constitués d'au moins deux fils multifilaments torsadés en bout les uns avec les autres, qui à l'intérieur de la couche sont pour l'essentiel disposés parallèlement les uns aux autres et à distance les uns des autres, et un fil multifilament étant constitué de poly(téréphtalate d'éthylène) (PET) et d'un autre fil multifilament en polyamide 4.6 (PA4.6), **caractérisée en ce que** la couche de renforcement présente, pour un allongement de 4 %, pour une largeur de la couche de renforcement de 10 mm, une résistance dans la plage de 100 N/cm à 500 N/cm, de préférence une résistance dans la plage de 130 N/cm à 430 N/cm, les mesures étant effectuées conformément à ASTM D 855.

2. Couche de renforcement selon la revendication 1, **caractérisée en ce que** le fil multifilament en PET est un HMLS-PET ou un reg.-PET ou un PET recyclé.

3. Couche de renforcement selon l'une ou plusieurs des revendications 1 ou 2, **caractérisée en ce que** le câblé hybride présente la structure PET 360 dtex x1 + PA4.6 470 dtex x1 ou PET 550 dtex x1 + PA4.6 470 dtex x1 ou la structure PET 1100 dtex x1 + PA4.6 940 dtex x1 ou la structure PET 1440 dtex x1 + PA4.6 1400 dtex x1.

4. Couche de renforcement selon l'une ou plusieurs des revendications 1 à 3, **caractérisée en ce que** le coefficient de torsion α de chaque fil multifilament ou du câblé hybride est compris dans la plage de 120 à 230, de préférence dans la plage de 140 à 210, avec α = torsion [t/m] × (finesse [tex]/1 000)^{1/2}.

5. Couche de renforcement selon l'une ou plusieurs des revendications 1 à 4, **caractérisée en ce que** le câblé hybride présente un retrait dans la plage de 4,0 % à 6,5 %, de préférence dans la plage de 4,5 % à 6,0 % à 180 °C, les mesures étant effectuées conformément à ASTM D 855.

6. Pneu pour véhicule contenant au moins une couche de renforcement selon l'une des revendications 1 à 5, **caractérisé en ce que** la couche de renforcement est une nappe d'armature et/ou un renfort de talon.
